# EUROPEAN PATENT APPLICATION

(11) **EP 3 570 142 A1**
(43) Date of publication of application: **20.11.2019**
(21) Application number: 19167526.3
(22) Date of filing: 05.04.2019
(51) Int. Cl.: G06F 3/01, G06F 3/0354

(54) **HAPTIC RING**

(30) Priority: 20.04.2018 US 201815958964
(71) Applicant: Immersion Corporation, San Jose, CA 95134 (US)
(72) Inventor: FOREST, Simon, Montreal, Québec H1X 3P2 (CA); GRANT, Danny, Laval, Québec H7M 2A1 (CA); KHOSHKAVA, Vahid, Montreal, Québec H2X 3R4 (CA); MOUSAKHANIAN, Razmik, Baie-D'Urfé, Québec H9X 227 (CA)
(74) Representative: Hofstetter, Schurack & Partner

(57) **Abstract**

A wearable device for providing haptic effects includes an open ring component configured to abut against to a first portion of a wearer. The open ring component has a C-shaped body with a first end, a second end spaced from and opposed to the first end, and a circumferential opening with a first width when the open ring component is in a non-actuated state. The open ring component includes a first laminate layer, a second laminate layer, and a macro-fiber composite actuator integrally formed with the first laminate layer and the second laminate layer. The macro-fiber composite actuator is configured to receive a command signal from a processor and deform to an actuated state in which the circumferential opening has a second width in response to the command signal to provide a force onto a second portion of the wearer that extends between the first end and the second end of the open ring component.

## Description

### FIELD OF THE INVENTION

The present invention relates to macro-fiber composite (MFC) actuators. More particularly, the invention relates to macro-fiber composite actuators integrated into a wearable device for providing haptic effects.

### BACKGROUND OF THE INVENTION

Video games and video game systems have become even more popular due to the marketing toward, and resulting participation from, casual gamers. Conventional video game devices or controllers use visual and auditory cues to provide feedback to a user. In some interface devices, kinesthetic feedback (such as active and resistive force feedback) and/or tactile feedback (such as vibration, texture, and heat) is also provided to the user, more generally known collectively as "haptic feedback" or "haptic effects". Haptic feedback can provide cues that enhance and simplify the user interaction or user experience. Specifically, vibration effects, or vibrotactile haptic effects, may be useful in providing cues to users of electronic devices to alert the user to specific events, or provide realistic feedback to create greater sensory immersion within a simulated or virtual environment.

Various haptic actuation technologies have been used to provide vibrotactile haptic feedback. Traditional haptic feedback devices use electric actuators, such as Linear Resonant Actuator ("LRA") devices and Eccentric Rotating Mass ("ERM") devices, or solenoids. However, these actuators are generally not scalable and do not always perform sufficiently in haptic applications. These devices are often very bulky and can have difficulty meeting certain space limitations.

Conventional haptic feedback systems for gaming, virtual reality, augmented reality, and other devices generally include one or more actuators attached to or contained within a housing of a handheld controller/peripheral for generating haptic feedback. Embodiments hereof relate to one or more actuators attached to or contained within a wearable device for generating haptic feedback.

### SUMMARY OF THE INVENTION

Embodiments hereof relate to a wearable device for providing haptic effects. The wearable device includes an open ring component configured to abut against a first portion of a wearer. The open ring component has a first end, a second end spaced from and opposed to the first end, and a circumferential opening defined between the first end and the second end, the circumferential opening having a first width when the open ring component is in a non-actuated state. The open ring component includes a first laminate layer, a second laminate layer, and an actuator integrally formed with the first laminate layer and the second laminate layer. The actuator is configured to receive a command signal from a processor and deform the open ring component to an actuated state in which the circumferential opening has a second width in response to the command signal to provide a force onto a second portion of the wearer that is disposed between the first end and the second end of the open ring component. The second width is different than the first width of the circumferential opening.

In an embodiment hereof, the wearable device includes an open ring component configured to abut against a digit of a hand of a wearer. The open ring component has a first end and a second end spaced from and opposed to the first end. The open ring component includes a first laminate layer formed from a unidirectional carbon fiber composite, a second laminate layer formed from a woven carbon fiber composite, and a macro-fiber composite actuator integrally formed with the first laminate layer and the second laminate layer. The macro-fiber composite actuator is configured to receive a command signal from a processor and deform the open ring component in response to the command signal to provide a force onto a portion of the wearer that extends between the first end and the second end of the open ring component.

Embodiments hereto also relate to a method of manufacturing a wearable device for providing haptic effects. A first laminate layer, a second laminate layer, and a macro-fiber composite actuator are assembled onto a mold. The first laminate layer is formed from a unidirectional carbon fiber composite and the second laminate layer is formed from a woven carbon fiber composite. The first laminate layer, the second laminate layer, and the macro-fiber composite actuator are heated on the mold to integrally form an open ring component including the first laminate layer, the second laminate layer, and the macro-fiber composite actuator. The open ring component is removed from the mold, the open ring component having a first end and a second end spaced from and opposed to the first end.

### BRIEF DESCRIPTION OF THE DRAWINGS

The foregoing and other features and aspects of the present technology can be better understood from the following description of embodiments and as illustrated in the accompanying drawings. The accompanying drawings, which are incorporated herein and form a part of the specification, further serve to illustrate the principles of the present technology. The components in the drawings are not necessarily to scale.
FIG. 1 shows a haptic feedback system including an open ring component for providing haptic effects to a wearer in accordance with an embodiment hereof, wherein the haptic feedback system is disposed on a hand of the wearer.
FIG. 2 shows another view of the haptic feedback system of FIG. 1, wherein the haptic feedback system is disposed on a hand of the wearer.
FIG. 3 is a perspective view of the open ring component of FIG. 1, wherein the open ring component is shown prior to assembly into the haptic feedback system of FIG. 1 and without an outer protective coating thereon
FIG. 4 is a top view of the haptic feedback system of FIG. 1, wherein the haptic feedback system is not disposed on a hand of the wearer.
FIG. 5 is a perspective view of the haptic feedback system of FIG. 1, wherein the haptic feedback system is not disposed on a hand of the wearer.
FIG. 6 is a schematic illustration showing the components or plurality of layers of the open ring component of FIG. 3 in accordance with an embodiment hereof.
FIG. 7 is an exploded top view showing the components or plurality of layers of the open ring component of FIG. 3 in accordance with an embodiment hereof.
FIG. 7A is an exploded perspective view of the components of a macro-fiber composite actuator utilized in the open ring component of FIG. 3 in accordance with an embodiment hereof.
FIG. 8 is an exploded perspective view showing the components or plurality of layers of the open ring component of FIG. 3.
FIG. 8A is a perspective view of the components of FIG. 8 coupled together.
FIG. 8B is a perspective view of FIG. 8A after producing an electric charge and bending in response thereto.
FIG. 9 is a schematic illustration of the open ring component of FIG. 1 disposed on a hand of the wearer, wherein a macro-fiber composite actuator of the open ring component is in a non-actuated state.
FIG. 9A is a top view of the open ring component of FIG. 9.
FIG. 10 is a schematic illustration of the open ring component of FIG. 1 disposed on a hand of the wearer, wherein a macro-fiber composite actuator of the open ring component is in an actuated state.
FIG. 10A is a top view of the open ring component of FIG. 10.
FIG. 11 is a top view of a sensor for use in embodiments hereof.
FIG. 12 is a block diagram of the haptic feedback system of FIG. 1, wherein the open ring component thereof includes the sensor of FIG. 11.
FIG. 13 is an exemplary wiring diagram of the open ring component of FIG. 12.
FIG. 14 is a perspective view of an insert of a first size and the open ring component of FIG. 3 disposed on an outer surface of the insert.
FIG. 15A is a perspective view of the insert of FIG. 14.
FIG. 15B is a perspective view of an insert of a second size, the second size being larger than the first size of the insert of FIG. 15A.
FIG. 15C is a perspective view of an insert of a third size, the third size being larger than the second size of the insert of FIG. 15B.
FIG. 16 is a flow chart illustrating a method of manufacture of the open ring component of FIG. 3.
FIG. 17 is a side view of a mold that may be utilized in the method of manufacture of FIG. 16.
FIG. 18 is a top view of a template that may be utilized in the method of manufacture of FIG. 16.
FIG. 19 is a top view of the template of FIG. 18 being used to provide the first laminate layer of the open ring component of FIG. 3.
FIG. 20 is a perspective view of the first laminate layer of the open ring component of FIG. 3 after utilization of the template of FIG. 18.
FIG. 21 is a top view of a template that may be utilized in the method of manufacture of FIG. 16.
FIG. 22 is a top view of the template of FIG. 21 being used to provide the second laminate layer of the open ring component of FIG. 3.
FIG. 23 is a perspective view of the second laminate layer of the open ring component of FIG. 3 after utilization of the template of FIG. 21.
FIG. 24 is a top view of a template that may be utilized in the method of manufacture of FIG. 16.
FIG. 25 is a top view of the template of FIG. 24 being used to provide the macro-fiber composite actuator of the open ring component of FIG. 3.
FIG. 26 is a perspective view of the macro-fiber composite actuator of the open ring component of FIG. 3 after utilization of the template of FIG. 24.
FIG. 27 is a top view of a mold that may be utilized in the method of manufacture of FIG. 16.
FIG. 28 is a top view of a sensor formed with the mold of FIG. 27.
FIG. 29 is a top view of the sensor of FIG. 28 after being shaped for utilization in the open ring component.
FIG. 30 is a top view of the sensor of FIG. 29 after being disposed on the macro-fiber composite actuator of FIG. 26.
FIG. 31 is a top view illustrating placement of band extensions on the sensor and macro-fiber composite actuator assembly of FIG. 30.
FIG. 32 is a side view of the first and second laminate layers for forming the open ring component of FIG. 3 disposed on the mold of FIG. 17.
FIG. 33 is a side view of the first laminate layer, the second laminate layer, and the sensor and macro-fiber composite actuator assembly disposed on the mold of FIG. 17.
FIG. 34 illustrates the open ring component of FIG. 3 after removal from the mold of FIG. 17, wherein the open ring component includes the first laminate layer of FIG. 20, the second laminate layer of FIG. 23, the macro-fiber composite actuator of FIG. 26, and the sensor of FIG. 29.
FIG. 35 illustrates the open ring component of FIG. 34 after an outer protective coating is applied thereto.

### DETAILED DESCRIPTION OF THE INVENTION

Specific embodiments of the present invention are now described with reference to the figures, wherein like reference numbers indicate identical or functionally similar elements. The foregoing and other features and advantages of the invention will be apparent from the following description of embodiments hereof as illustrated in the accompanying drawings. The accompanying drawings, which are incorporated herein and form a part of the specification, further serve to explain the principles of the invention and to enable a person skilled in the pertinent art to make and use the invention. The drawings are not to scale.

The following detailed description is merely exemplary in nature and is not intended to limit the invention or the application and uses of the invention. Furthermore, there is no intention to be bound by any expressed or implied theory presented in the preceding technical field, background, brief summary or the following detailed description. Furthermore, although the following description is directed to wearable devices for receiving feedback in a virtual reality (VR) or augmented reality (AR) environment, those skilled in the art would recognize that the description applies equally to other haptic feedback devices and applications.

Embodiments hereof are directed to a wearable device for providing haptic effects in a virtual reality or augmented reality environment. The wearable device is an open ring component that includes an actuator configured to receive a command signal from a processor and to deform the open ring component in response to the command signal. When the open ring component deforms, the ends of the open ring component move closer together and/or further apart, and thereby provide a force onto the wearer by essentially pinching or squeezing the skin of the wearer that extends between the ends of the open ring component. The open ring component is configured to operate at low frequencies to produce perceivable haptic effects onto the skin of the wearer. Further advantages of the wearable device or open ring component is that the wearable device is very thin, is light weight, the actuation of the actuator is quiet, the actuation of the actuator has low power consumption, and the actuation of the actuator operates in a broad range of frequencies (two (2) Hz to 1 KHz).

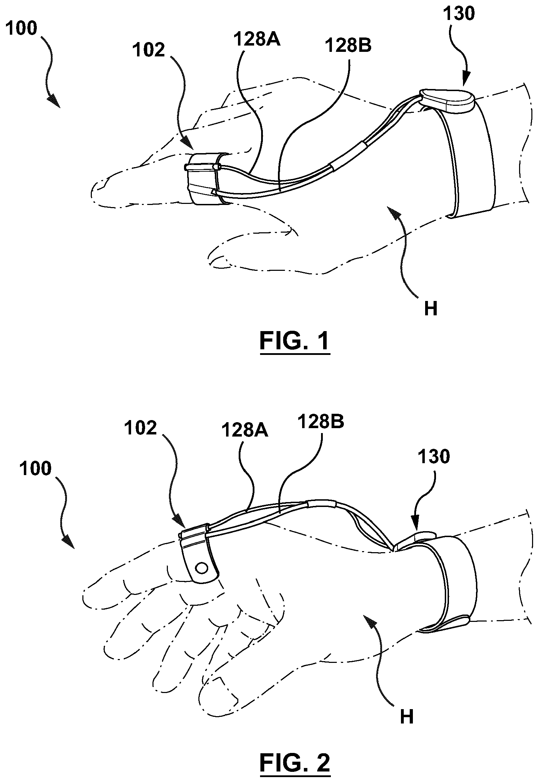

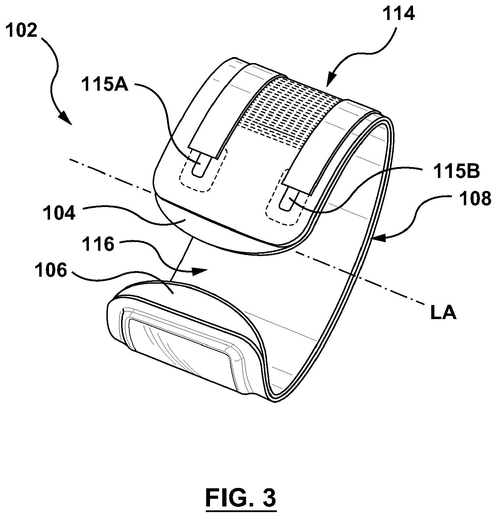

More particularly, with initial reference to FIGS. 1 and 2, a haptic feedback system 100 includes an open ring component 102 for providing haptic effects to a wearer in accordance with an embodiment hereof. In the embodiment of FIGS. 1 and 2, the open ring component 102 is a wearable device that is disposed on a digit or finger of a hand H of the wearer. In order to exert a force onto the digit or finger of the wearer, the open ring component 102 is configured to receive a command signal from a control device 130 and is configured to deform in response to the command signal as will be explained in more detail herein. In this embodiment, the control device 130 is also a wearable device that is disposed on a wrist of the wearer and the control device 130 is electrically connected to the open ring component 102 via power leads 128A, 128B. However, the control device is not required to be wearable. Power leads 128A, 128B are electrically coupled to a pair of soldering pads 115A, 115B (shown on FIG. 3) of the open ring component 102. One of the soldering pads is positive, while the other soldering pad is negative.

In an embodiment, the open ring component 102 is configured to partially surround or encircle at least a portion of a finger. The open ring component 102 has a simple design that allows for easy attachment and easy removal from a wearer's hand since the open ring component 102 may slide over the wearer's finger similar to a jewelry ring. Further, the open ring component 102 is configured to be less obtrusive than a glove during use to enable wearers to interact with their physical world in a relatively uninhibited manner while still providing haptic feedback interactions. Although described herein as being configured to be worn on a digit or finger of a wearer, the open ring component 102 may be alternatively configured to be worn on an arm of a wearer, a leg of a wearer, or a torso of a wearer and the dimensions of the open ring component 102 would vary accordingly.

The open ring component 102 is configured to abut against the wearer's skin adjacent thereto. As used herein, the term "abut against" means that the open ring component 102 maintains consistent and close contact with the wearer's skin adjacent thereto. Stated another way, the open ring component 102 is tight or snug fitting for constant and close contact with the wearer's underlying finger or other body part. Such constant and close contact is desirable in order for tactile haptic effects that are rendered by the open ring component 102 to be perceived or felt by the wearer.

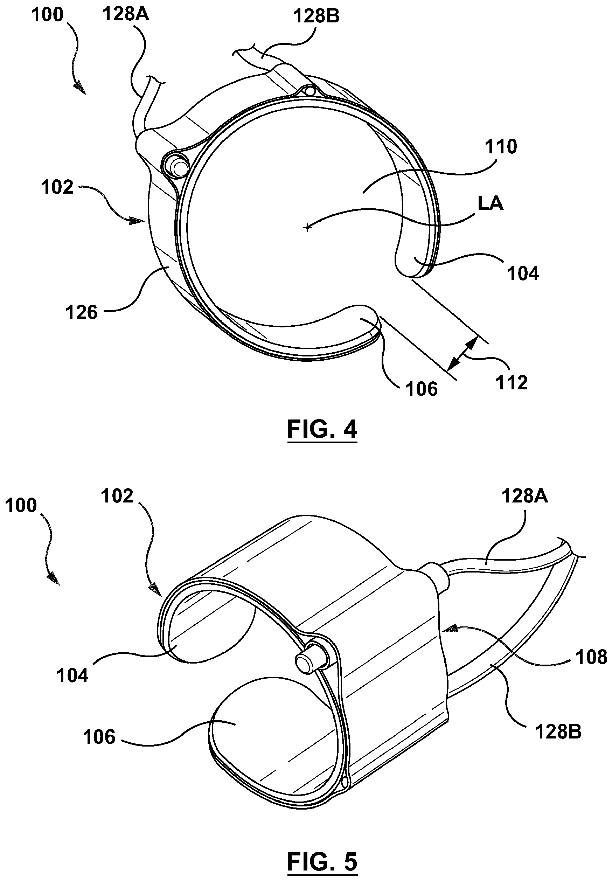

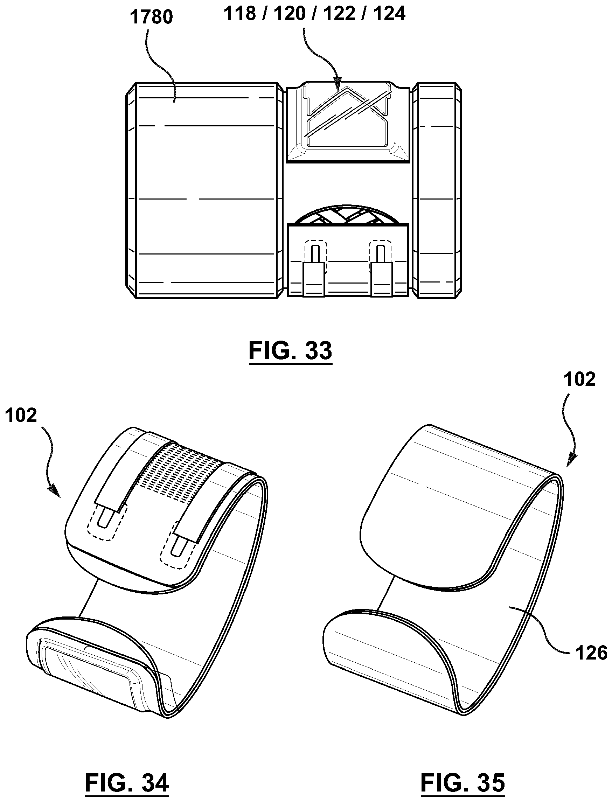

Turning to FIGS. 3-5, the structure of the open ring component 102 will now be described in more detail. FIG. 3 is a perspective view of the open ring component 102 prior to assembling into the haptic feedback system 100 and without an outer protective coating 126 thereon (the outer protective coating 126 is shown in FIG. 35), while FIGS. 4 and 5 are top and perspective views, respectively, of the haptic feedback system 100 not disposed on a hand of the wearer. The open ring component 102 is a C-shaped component having a first end 104, a second end 106, and a curved or C-shaped body 108 extending between the first and second ends 104, 106. "Open ring" as used herein means that the open ring component 102 is an annular component in which the first end 104 is not connected to the second end 106, or stated another way the first end 104 is spaced from and opposed to the second end 106. Further, although described as C-shaped, the body of the open ring component 102 may be more oval in shape rather than circular. The open ring component 102 further includes an inner surface 116 and an outer surface 114. The inner surface 116 of the open ring component 102 defines a central opening 110 that extends generally parallel to a longitudinal axis LA of the open ring component 102. A circumferential gap or opening 112 extends generally in a circumferential direction between the first end 104 and the second end 106 of the open ring component 102.

The thickness of the open ring component 102 ranges from 1-5 millimeters in order to optimize displacement of force. In an embodiment hereof, a thickness of the open ring component 102 is uniform. In another embodiment, the thickness of the open ring component 102 is not uniform. For example, a first thickness of a middle or intermediate portion of the C-shaped body 108 may be thicker than a second thickness of the first end 104 and/or the second end 106 of the open ring component 102. Other variations in thickness profiles of the open ring component 102 are also possible.

In addition to the thickness, other parameters of the open ring component 102 may be varied to optimize displacement of force and/or to increase the overall performance of the haptic device. Such parameters include varying the stiffness of one or more layers of the open ring component 102. Stiffness of the open ring component 102 is a function of the geometry and the mechanical properties of the particular layer. Other parameters that may be varied to enhance the performance of the open ring component include the geometry of the structure (*i*.*e*., whether the body is more circular or oval) to increase the torque/force and/or the displacement, the actuator type (piezoceramics, EAP, and the like), and the actuator design (unimorph, bimorph, stacking, and the like).

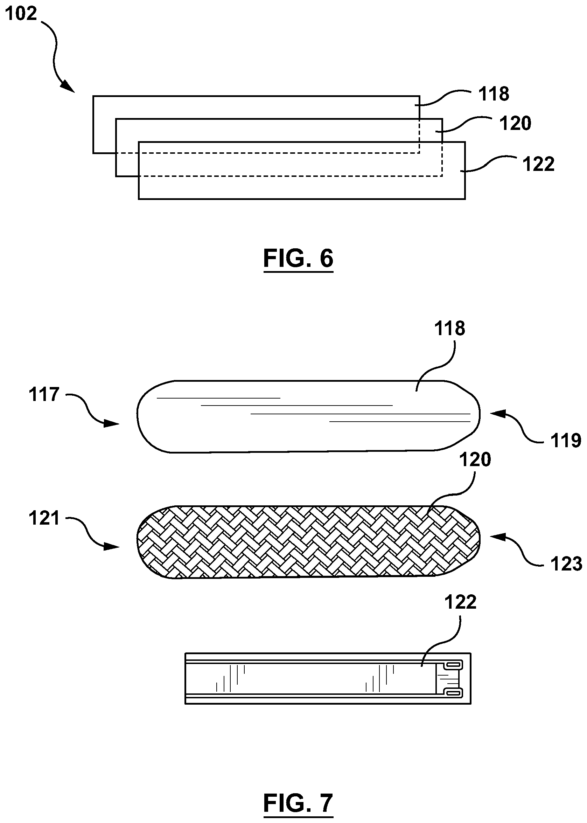

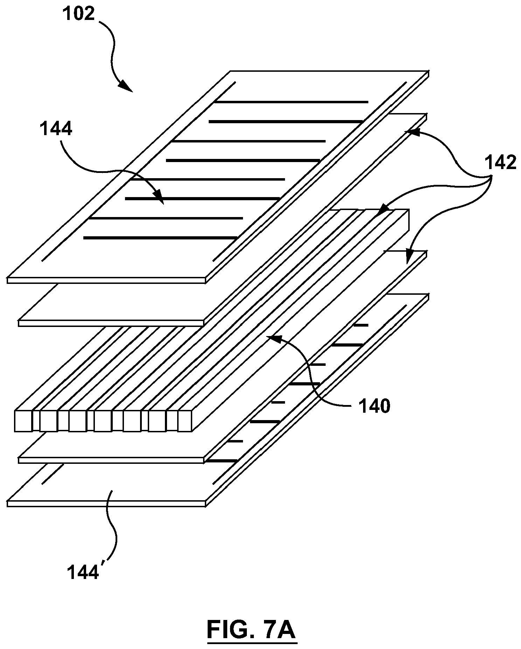

The C-shaped body 108 of the open ring component 102 includes a plurality of layers that are attached or bonded together to form an integral component. More particularly, turning now to FIGS. 6 and 7, exploded views of the plurality of layers of the open ring component 102 are shown for illustrative purposes only. The open ring component includes at least a first laminate layer 118, a second laminate layer 120, and an actuator 122. As used herein first and second "laminate layers" refer to thin, structural layers that are disposed adjacent to the actuator 122. The laminate layers 118 and 120 function to transmit strong and sharp haptic signals from the actuator 122 to the wearer of the open ring component 102. Further, the laminate layers 118 and 120 balance thermal expansion of the open ring component 102 during actuation of the actuator 122.

Each laminate layer 118 and 120 is suitably on the order of a few microns to a few millimeters in thickness. The thickness of the open ring component 102 is primarily determined via the thickness of the laminate layers 118, 120 and thus the material and thickness of the laminate layers 118, 120 is suggested to be selected carefully to provide the open ring component 102 with a low or slim profile as well as with a desired sensitivity that permits the actuator 122 to operate at very low frequencies as will be described in more detail herein. Structurally, it is desirable that the laminate layers 118 and 120 be substantially similar in both shape and size (i.e., length and width) because the laminate layers 118, 120 are bonded together and molded into a C-shape in order to form the open ring component 102. The length and width of the laminate layers 118 and 120 depend upon the intended application or wearable destination of the open ring component 102 and thus may vary depending upon application. For example, the length of each of the laminate layers 118 and 120 is in the range of 18-24 mm and the width of each of the laminate layers 118 and 120 is in the range of 2-4 mm when the open ring component 102 is configured to be worn on a digit or finger of a wearer. However, if the open ring component 102 is alternatively configured to be worn on an arm of a wearer, a leg of a wearer, or a torso of a wearer, the dimensions of the laminate layers 118 and 120 of the open ring component 102 would vary accordingly.

As best shown on FIG. 7, each of the first laminate layer 118 and the second laminate layer 120 includes rounded opposing ends. More particularly, the first laminate layer 118 has a first end 117 and an opposing second end 119 while the second laminate layer 120 has a first end 121 and an opposing second end 123. Since the first ends 117, 121 of the laminate layers 118, 120 collectively form the first end 104 of the open ring component 102, and the second ends 119, 123 of the laminate layers 118, 120 collectively form the second end 106 of the open ring component 102, such ends 117, 119, 121, 123 are preferably rounded since they make contact with the wearer's skin during actuation of the actuator 122.

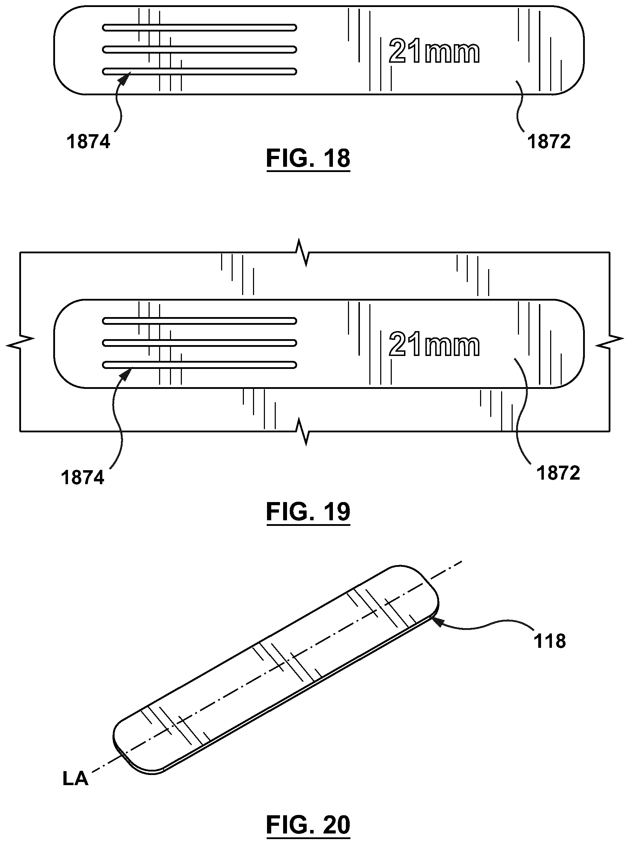

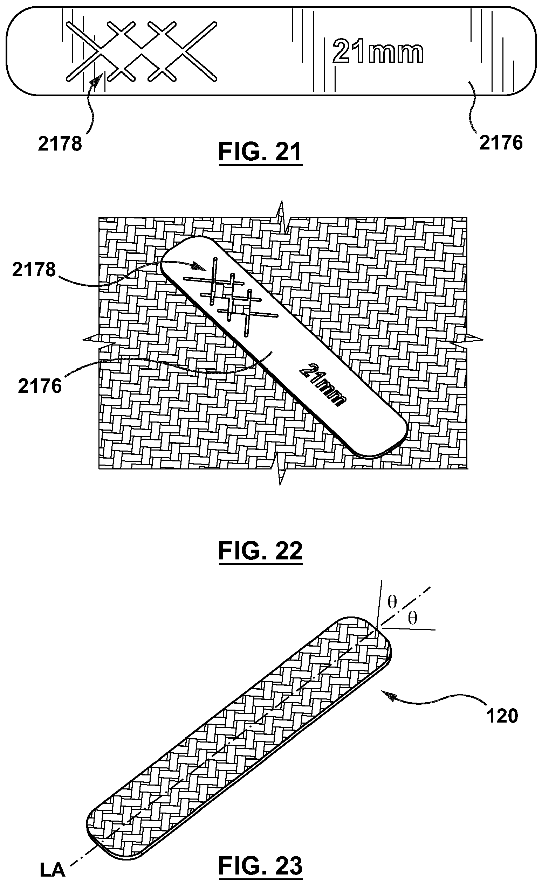

In an embodiment, the first laminate layer 118 is formed from a unidirectional carbon fiber composite. As will be described in more detail herein with respect to FIGS. 19-20, the fibers of the unidirectional carbon fiber composite of the first laminate layer 118 are oriented parallel to a longitudinal axis of the first laminate layer 118 (shown on FIG. 20). Further, in an embodiment, the second laminate layer 120 is formed from a woven carbon fiber composite and the fibers of the woven carbon fiber composite are oriented at an angle of 45 degrees relative to a longitudinal axis of the second laminate layer 120 (shown on FIG. 23) as described in more detail herein with respect to FIGS. 22-23. Other materials may also be utilized for the first laminate layer 118 and/or the second laminate layer 120, including but not limited to glass fiber, carbon fiber composites other than those listed above, or other reinforced composites or other polymeric or metallic materials having a relatively high modulus that yields strength while also being sufficiently flexible to deform.

In an embodiment hereof, the actuator 122 is a smart material actuator. More particularly, in an embodiment hereof, the actuator 122 is formed from a macro fiber composite (MFC) material, a piezoelectric material, or an electroactive polymer (EAP). For sake of illustration, the actuator 122 will be described herein as an actuator formed from a macro fiber composite (MFC) material. As best shown in the exploded view of FIG. 7A, which is an exploded view of an exemplary macro-fiber composite actuator that may be modified for use in the open ring component 102, the macro-fiber composite actuator 122 has a multi-layer structure that is formed into a thin conformable sheet. The macro-fiber composite actuator 122 includes rectangular piezo ceramic (suitably ribbon-shaped) rods 140 sandwiched between layers of adhesive 142 (e.g., epoxy layers), and layers of polyimide film 144, 144' having electrodes attached thereto. The electrodes are attached to the film in an interdigitated pattern which transfers an applied voltage to the macro-fiber composite directly to and from the ribbon-shaped rods. This assembly enables in-plane poling, actuation and sensing in a sealed and durable, ready to use package. Since the macro-fiber composite actuator is formed as a thin, surface conformable sheet, it can be applied (normally bonded) to various types of structures or embedded in a composite structure. If voltage is applied, the macro-fiber composite actuator will bend or distort materials, counteract vibrations or generate vibrations. If no voltage is applied, the macro-fiber composite actuator can work as a very sensitive strain gauge, sensing deformations, noise and vibrations. The macro-fiber composite actuator is also an excellent device to harvest energy from vibrations. The structure and materials useful in forming macro-fiber composite actuators are further described in U.S. Patent No. 6,629,341, the disclosure of which is incorporated by reference herein in its entirety for all purposes. As will be described in more detail herein in the discussion of the method of manufacture of the open ring component 102, the macro-fiber composite actuator 122 may further include a coating of insulation disposed thereon and/or one or more layers of fiberglass disposed on an inner surface thereof. In an embodiment hereof, the macro-fiber composite actuator 122 is formed from M-8507-P1 macro-fiber composite commerically available from Smart Material Corporation of Sarasota, FL which uses a voltage of -500V to +1500V.

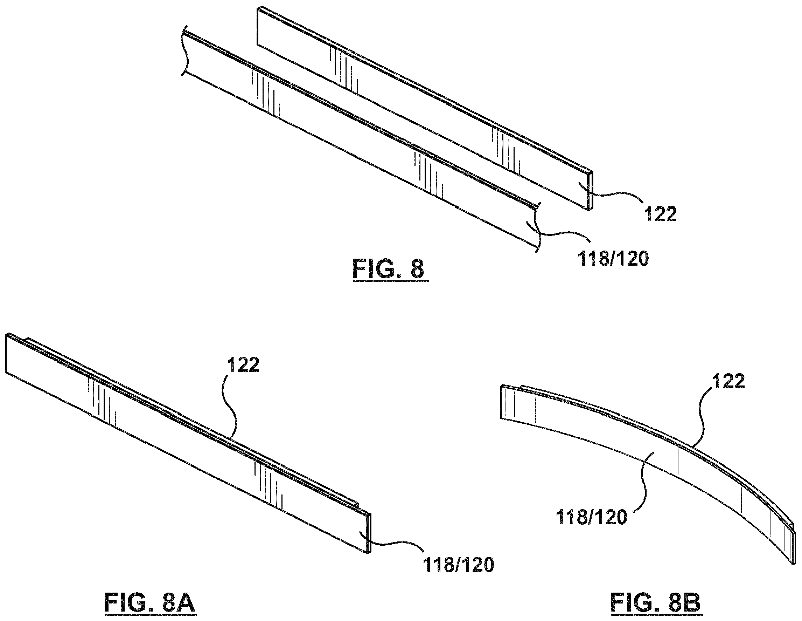

The operation of the macro-fiber composite actuator 122 will now be described in more detail with respect to FIGS. 8, 8A, and 8B. FIG. 8 is an exploded perspective view of the first and second laminate layers 118, 120 bonded together and the macro-fiber composite actuator 122. For description purposes only to illustrate the operation thereof, FIGS. 8, 8A, and 8B illustrate the laminate layers 118, 120 and the macro-fiber composite actuator 122 before being molded in a C-shape to form the open ring component 102. FIG. 8A is a perspective view of the components of FIG. 8 coupled together, and FIG. 8B is a perspective view of the coupled components of FIG. 8A after bending in response to an applied electrical charge or electric field. More particularly, the macro-fiber composite actuator 122 has the property of exhibiting a change in size or shape when subjected to an electrical charge. Stated another way, the macro-fiber composite actuator 122 exhibits mechanical deformation when an electrical charge is exerted thereon. When an electrical charge is applied to the macro-fiber composite actuator 122, the macro-fiber composite actuator 122 deforms and bends as shown in FIG. 8B, thereby also bending the first and second laminate layers 118, 120.

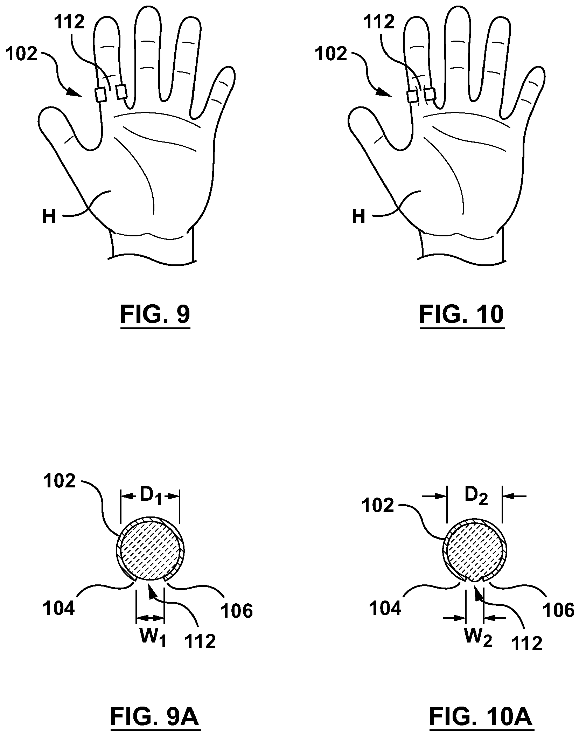

As best shown in FIGS. 9, 9A, 10 and 10A, due to the macro-fiber composite actuator 122, the open ring component 102 is configured to deform in response to an applied voltage in order to exert a force onto the skin of a wearer and convey haptic effects thereto. More particularly, FIG. 9 illustrates the open ring component 102 disposed on a digit or finger of a hand of the wearer with the macro-fiber composite actuator 122 in a non-actuated state. FIG. 9A is a top view of FIG. 9. Conversely, FIG. 10 illustrates the open ring component 102 disposed on a digit or finger of a hand of the wearer with the macro-fiber composite actuator 122 in an actuated state. FIG. 10A is a top view of FIG. 10. In the non-actuated state of FIGS. 9 and 9A, the open ring component 102 has a nominal or first inner diameter D1 and the circumferential opening 112 of the open ring component 102 has a nominal or first width W1. The finger or digit of the wearer may be considered to have two portions that collectively extend around a full circumference thereof. More particularly, a first circumferential portion of the finger or digit of the wearer abuts against an inner surface of the open ring component 102 while a second circumferential portion of the finger or digit of the wearer extends between the first and second ends 104, 106 of the open ring component 102, adjacent to the circumferential opening 112 of the open ring component 102.

When the macro-fiber composite actuator 122 is actuated, the open ring component 102 deforms in response to an applied voltage. In the actuated state of FIGS. 10 and 10A, the open ring component 102 has a second inner diameter D2, which is less than the first inner diameter D1, and the circumferential opening 112 of the open ring component 102 has a second width W2, which is less than the first width W1. As a result, the open ring component 102 provides a force onto the second circumferential portion of the finger or digit of the wearer that extends or is disposed between the first and second ends 104, 106 of the open ring component 102, and adjacent to the circumferential opening 112 of the open ring component 102. Stated another way, the open ring component 102 essentially pinches or squeezes the skin of the finger or digit of the wearer that extends between the first and second ends 104, 106 of the open ring component 102 in order to provide perceivable haptic effects at very low frequencies. In FIG. 10A, the skin that extends between the first and second ends 104, 106 of the open ring component 102 is shown as bulging radially outwards between the first and second ends 104, 106 of the open ring component 102 for illustrative purposes only. Such bulging is not required for the open ring component 102 to produce perceivable haptic effects to the wearer thereof. In addition to exerting a force onto the skin of the finger or digit of the wearer that extends between the first and second ends 104, 106 of the open ring component 102, in an embodiment the open ring component 102 in the actuated state also exerts a force onto the first circumferential portion of the finger or digit of the wearer that abuts against an inner surface of the open ring component 102. Stated another way, the open ring component 102 may also squeeze the underlying finger or digit of the wearer in the actuated state in order to provide perceivable haptic effects at very low frequencies.

Although the actuated state of FIGS. 10 and 10A illustrates the open ring component 102 contracting such that the effective diameter thereof decreases, it will be understood by one of ordinary skill in the art that the open ring component 102 may also be deformed such that the effective diameter thereof increases. Stated another way, the open ring component 102 is configured to open and close to effectively increase and decrease the nominal or first inner diameter D1. In addition, in an embodiment, the actuated state of FIGS. 10 and 10A may include closure of the open ring component 102 such that the first end 104 contacts or abuts against the second end 106.

The open ring component 102 is configured to operate at a frequency as low as two (2) Hz, as well as at frequency as high as 1 KHz, to provide a variety of haptic effects to the wearer thereof. In an embodiment, the open ring component 102 applies or operates at DC (direct current) force. Examples of haptic effects include a jolt via a single relatively large deformation in conjunction with, for e.g., a virtual button press or collisions between virtual elements, or vibrations via multiple relatively small deformations in conjunction with, for e.g., movement of virtual elements across the screen, or other types of screen movements. Additional examples of haptic effects include a heartbeat haptic effect in which the deformation of the open ring component 102 follows the pattern of a heartbeat signal, in both magnitude and frequency, and/or a breathing haptic effect in which, for e.g., deformation of the open ring component 102 follows the pattern of a small living animal which is breathing in your hand in a virtual reality environment. Such haptic feedback or effects allow for a more intuitive, engaging, and natural experience for the wearer of the open ring component 102 and thus interaction between the wearer and haptic feedback system 100 is considerably enhanced through the tactile feedback provided by the haptic effects.

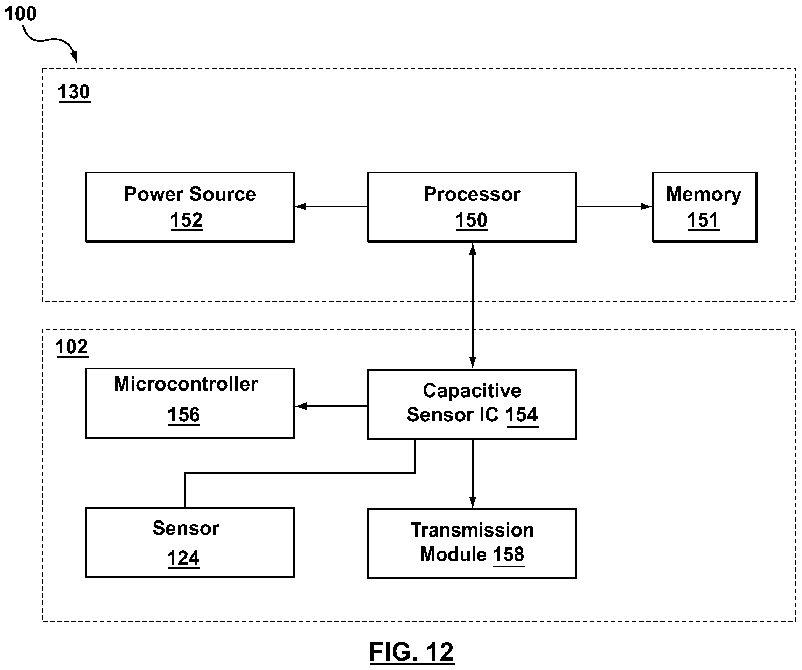

In order to apply an electrical charge to the macro-fiber composite actuator 122 of the open ring component 102, haptic feedback system 100 includes control hardware and software that provide electric signals to the macro-fiber composite actuator 122 causing the macro-fiber composite actuator 122 to deform as desired to produce haptic feedback or effects to a wearer. More particularly, the control device 130 includes a power source 152 (shown on FIG. 12) for supplying an electrical charge to the macro-fiber composite actuator 122 and the control device 130 also includes a processor 150 (shown in FIG. 12) having a memory 151 (shown on FIG. 12) which controls the power source and thus determines the magnitude and frequency of the applied electrical charge. The processor 150 may be programmed by one or more computer program instructions to carry out methods described herein. More particularly, the processor 150 may execute a software application that is stored in the memory 151 or another non-transitory computer-readable or tangible medium. As used herein, for convenience, the various instructions may be described as performing an operation, when, in fact, the various instructions program the processor 150 to perform the operation. In other embodiments, the functionality of the processor 150 may be performed by hardware (e.g., through the use of an application specific integrated circuit ("ASIC"), a programmable gate array ("PGA"), a field programmable gate array ("FPGA"), etc.), or any combination of hardware and software. The processor 150 may be any type of general purpose processor or could be a processor specifically designed to provide haptic effect signals. The power source 152 is configured to receive a control signal from the processor 150 and is configured to apply an electrical charge to the macro-fiber composite actuator 122 in accordance with the control signal received from the processor 150. The open ring component 102 deforms in response to the applied electrical charge from the power source 152 as described above with respect to FIGS. 9-10A to thereby provide a haptic effect to the wearer. With the macro-fiber composite actuator 122 integrated into the open ring component 102, the open ring component 102 thus deforms with a low or minimal consumption of power.

In an embodiment, the processor 150 of the control device 130 is a local processor that provides command signals to the open ring component 102 based on high level supervisory or streaming commands from an external or host computer (not shown). The external or host computer may be configured to generate a virtual environment on a display, and preferably runs one or more host application programs with which a user is interacting via peripherals, such as but not limited to the open ring component 102. The external or host computer may be a desktop computer, a gaming console, a handheld gaming device, a laptop computer, a smartphone, a tablet computing device, a television, an interactive sign, and/or other device. For example, when in operation, magnitudes and durations are streamed from the host computer to the open ring component 102 where information is provided to the macro-fiber composite actuator 122 via the local processor of the control device 130. The host computer may provide high level commands to the local processor of the control device 130 such as the type of haptic effect to be output by the macro-fiber composite actuator 122, whereby the local processor of the control device 130 instructs the macro-fiber composite actuator 122 as to particular characteristics of the haptic effect which is to be output (e.g. magnitude, frequency, duration, etc. such that haptic effects may feel bumpy, soft, hard, mushy, etc.). The local processor of the control device 130 may retrieve the type, magnitude, frequency, duration, or other characteristics of the haptic effect. The local processor of the control device 130 may also decide what haptic effects to send and what order to send the haptic effects. Time critical processing is preferably handled by the local processor of the control device 130, and thus the local processor of the control device 130 is useful to convey closed-loop haptic feedback with high update rates (e.g., 5-10 kHz). In another embodiment hereof, all input/output signals from the open ring component 102 are directly handled and processed by either the host computer or the processor 150 of the control device 130.

In some instances, the communication interfaces between components of the haptic feedback system 100 (i.e., between the open ring component 102 and the control device 130, and/or between the control device 130 and a host computer if present) may support a protocol for wireless communication, such as communication over an IEEE 802.11 protocol, a Bluetooth® protocol, near-field communication (NFC) protocol, or any other protocol for wireless communication. In some instances, the communication interfaces between components of the haptic feedback system 100 (i.e., between the open ring component 102 and the control device 130, and/or between the control device 130 and a host computer if present) may support a protocol for wired communication. In an embodiment, components of the haptic feedback system 100 (i.e., the open ring component 102 and the control device 130, and/or the control device 130 and a host computer if present) may be configured to communicate over a network, such as the Internet.

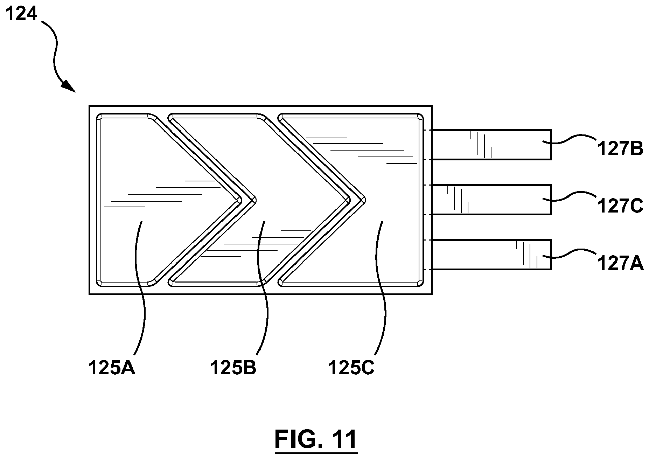

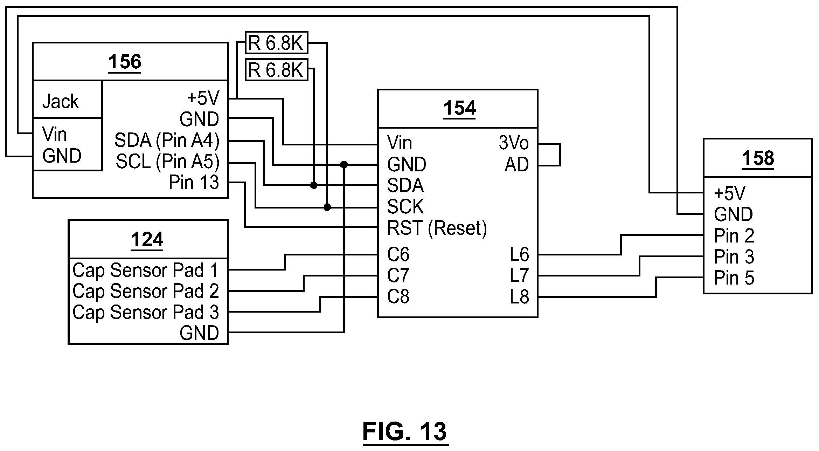

The macro-fiber composite actuator 122 may further include a sensor disposed thereon. For example, FIG. 11 is a top view of a sensor 124 configured to be disposed on the macro-fiber composite actuator 122 and integrated into the open ring component 102. The sensor 124 is a touch or contact sensor configured to sense user contact thereon. For example, the sensor 124 may be utilized to sense user contact to permit the user/wearer to interact with the virtual reality (VR) or augmented reality (AR) environment via the open ring component 102. As another example, the sensor 124 may be utilized to turn the open ring component 102 on and off. The sensor 124 includes a plurality of buttons or user input elements 125A, 125B, 125C having corresponding pins 127A, 127B, 127C, respectively. Each button or user input element 125A, 125B, 125C is configured to sense user interaction. More particularly, FIG. 12 is a block diagram of the haptic feedback system 100 and FIG. 13 is an exemplary wiring diagram for the open ring component 102. As shown in FIG. 12, the haptic feedback system 100 includes the control device 130 and the open ring component 102. As discussed above, the control device 130 includes the power source 152 and the processor 150 having memory 151 for providing command signals to the open ring component 102. In addition to the sensor 124, the open ring component 102 includes a microcontroller 156, a capacitive sensor integrated circuit (IC), and a transmission module 158. The microcontroller 156, the capacitive sensor integrated circuit (IC) 154, and the transmission module 158 are formed within the interdigitated pattern of the electrodes of the macro-fiber composite actuator 122. The microcontroller 156 sets up or starts the capacitive sensor integrated circuit (IC) 154 upon every boot, and the capacitive sensor integrated circuit (IC) 154 determines whether a user touch or contact has occurred. The transmission module 158 sends the output from the capacitive sensor integrated circuit (IC) 154 to the processor 150 of the control device 130 and also sends power from the control device 130 to the microcontroller 156. Thus, each button or user input element 125A, 125B, 125C of sensor 124 is configured to sense user contact. Further, the sensor 124 is electrically connected to the processor 150 of the control device 130 to convey or transmit its corresponding sensor signal.

Other sensors in addition to or as an alternative to the sensor 124 may be integrated into the open ring component 102. Examples of other sensors that may be integrally formed within or secured to the open ring component 102 include sensors that can sense pressure, proximity, position, and/or orientation. Examples of suitable sensors for use herein include capacitive sensors, resistive sensors, surface acoustic wave sensors, optical sensors (e.g., an array of light sensors for a shadow-based sensor that detects position by measuring ambient-light shadows produced by external objects), or other suitable sensors. In an embodiment hereof, the control device 130 may include a calibration module to calibrate signals coming from the sensors to be a standardized signal. Architectures and control methods that can be used for reading sensor signals and providing haptic feedback for a device are described in greater detail in U.S. Pat. No. 5,734,373 to Rosenberg et al., assigned to the same assignee of the present invention and the disclosures of which is incorporated by reference herein in its entirety.

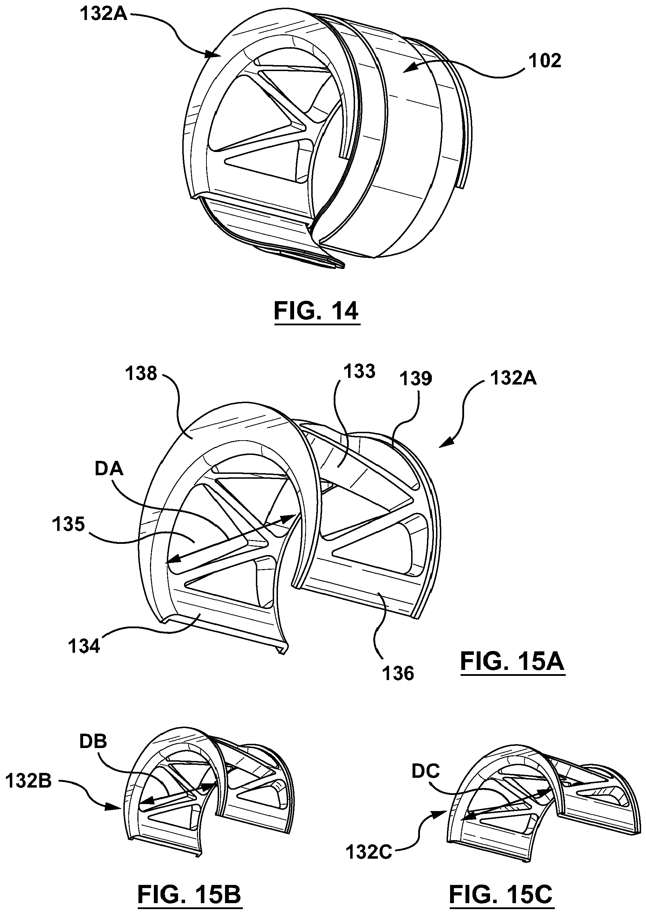

As described above, desirably the open ring component 102 is tight or snug fitting for constant and close contact with the wearer's underlying finger or other body part because such constant and close contact is required in order for tactile haptic effects that are rendered by the open ring component 102 to be perceived or felt by the wearer. FIGS. 14 and 15A-15C illustrate inserts to be utilized with the open ring component 102 in order to accommodate different finger sizes of a wearer. FIG. 14 is a perspective view of an insert 132A of a first size and the open ring component 102 is disposed on an outer surface of the insert 132A. FIG. 15A is a perspective view of the insert 132A. The insert 132A is a generally C-shaped component having a first end 134 and an opposing second end 136. First and second C-shaped edges 138, 139 extend between the first end 134 and the second end 136. The first and second C-shaped edges 138, 139 are the same size and shape, and define the inner diameter DA of the insert 132A. A plurality of struts 133 extend between the first and second C-shaped edges 138, 139, with openings 135 formed between adjacent struts 133. The first and second C-shaped edges 138, 139 and the struts 133 collectively form a structural framework or scaffold for supporting the open ring component 102 when the open ring component 102 is placed thereover. The inner diameter DA of the insert 132A is greater than the nominal or first inner diameter D1 of the open ring component 102 in the non-actuated state as described above with respect to FIG. 9A. As such, the insert 132A functions to widen the open ring component 102 to size the open ring component 102 for a relatively larger finger or digit. Stated another way, the insert 132A functions to adjust or shift the nominal or first inner diameter D1 of the open ring component 102 for a relatively larger finger or digit. The insert 132A is formed from a material that is sufficiently flexible to permit deformation of the open ring component 102. Similarly, FIGS. 15B and 15C are perspective views of inserts 132B, 132C of a second size and a third size, respectively. The inner diameter DB of the insert 132B is greater than the inner diameter DA of the insert 132A and the inner diameter DC of the insert 132C is greater than the inner diameter DB of the insert 132B.

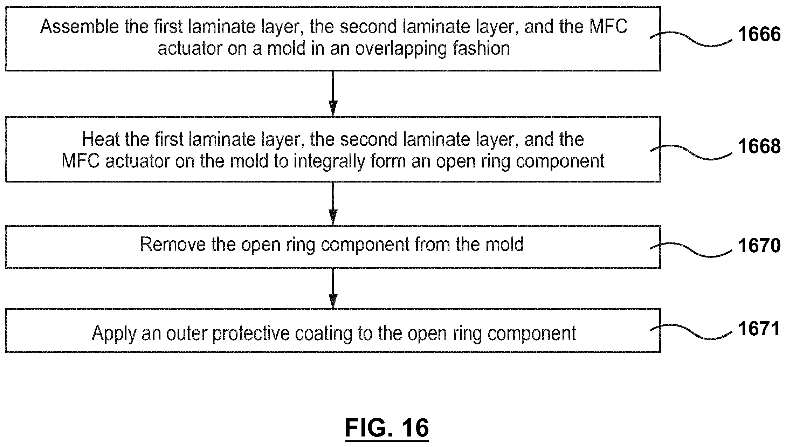

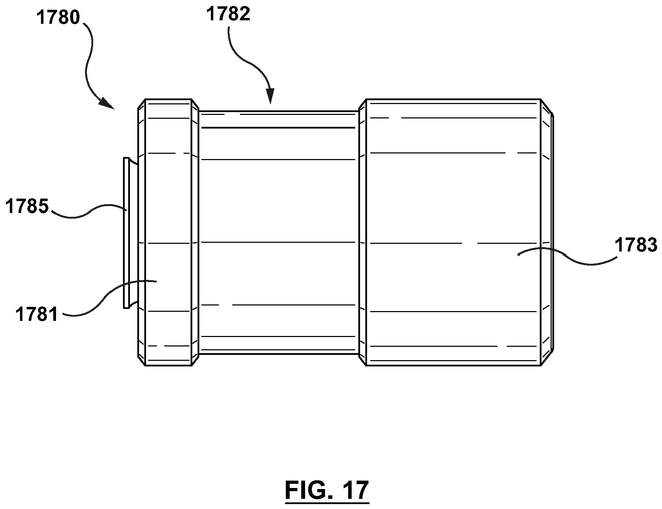

Turning now to FIG. 16, a method of manufacturing the open ring component 102 is shown. In a step 1666 of FIG. 16, the first laminate layer, the second laminate layer, and the macro-fiber composite actuator (and sensor 124 disposed thereon if present) are assembled onto a mold 1780 in an overlapping fashion. The mold 1780 is shown in FIG. 17 without any components thereon for illustration purposes and includes a circumferential groove 1782 configured to receive the overlapping first and second laminate layers thereon. The mold 1780 is preferably made of Teflon because epoxy does not stick to Teflon and Teflon is resistant to high temperatures up to 500 degrees F. The mold 1780 is a two-part assembly of a cap 1781 and a main body 1783 coupled together via a screw or other fastener 1785.

In an embodiment, the first laminate layer is formed from a unidirectional carbon fiber composite having parallel fibers and pre-impregnated with epoxy. In an embodiment, the first laminate layer is provided in a preform having the desired dimensions, *i*.*e*., having the size and shape suitable for assembly into the open ring component. In another embodiment, a template 1872 as shown in FIG. 18 is utilized to cut the first laminate layer from a sheet of material to desired dimensions. The template 1872 includes guides 1874 formed therein for alignment with the fibers of the unidirectional carbon fiber composite. More particularly, as shown in FIG. 19, the template 1872 is positioned over the sheet of material such that the parallel fibers thereof are aligned or oriented with the guides 1874 of the template 1872. The first laminate layer is cut out using the template 1872 such that the first laminate layer has the size and shape suitable for assembly into the open ring component as shown in FIG. 20, which illustrates the first laminate layer 118 cut to the desired dimensions. The fibers of the unidirectional carbon fiber composite of the first laminate layer 118 are oriented parallel to a longitudinal axis LA of the first laminate layer 118, which is shown on FIG. 20.

In an embodiment, the second laminate layer being formed from a woven carbon fiber composite having a plurality of perpendicular fibers and pre-impregnated with epoxy. In an embodiment, the second laminate layer is provided in a preform having the desired dimensions, *i*.*e*., having the size and shape suitable for assembly into the open ring component. In another embodiment, a template 2176 as shown in FIG. 21 is utilized to cut the second laminate layer from a sheet of material to desired dimensions. The template 2176 includes a guide 2178 formed therein for alignment with the fibers of the woven carbon fiber composite. More particularly, as shown in FIG. 22, the template 2176 is positioned over the sheet of material such that the woven fibers thereof are aligned or oriented within the guide 2178 of the template 2176. The second laminate layer is cut out using the template 2176 such that the second laminate layer has the size and shape suitable for assembly into the open ring component as shown in FIG. 23, which illustrates the second laminate layer 120 cut to the desired dimensions. The woven fibers of the second laminate layer 120 are oriented at an angle θ of approximately 45 degrees with respect to a longitudinal axis LA of the second laminate layer, which is shown on FIG. 23.

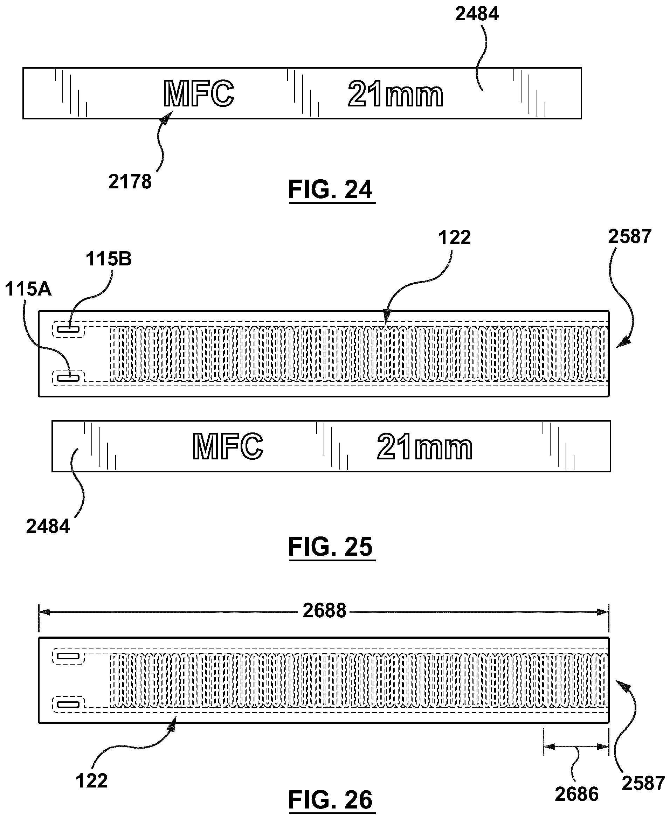

In an embodiment, the macro-fiber composite actuator is provided in a preform having the desired dimensions, *i*.*e*., having the size and shape suitable for assembly into the open ring component. In another embodiment, a template 2484 as shown in FIG. 24 is utilized to cut the macro-fiber composite actuator to desired dimensions. More particularly, with reference to FIG. 25, the template 2484 is positioned over the macro-fiber composite actuator and the macro-fiber composite actuator is cut to size such that the macro-fiber composite actuator has a cut end 2587 and an opposing end (which is not cut) having the pair of soldering pads 115A, 115B (one of which is positive, one of which is negative). The macro-fiber composite actuator is cut out using the template 2484 such that the macro-fiber composite actuator has the size and shape suitable for assembly into the open ring component as shown in FIG. 26, which illustrates the macro-fiber composite actuator 122 cut to the desired dimensions. Further, as shown in FIG. 26, the cut end 2587 of the macro-fiber composite actuator may be covered with an insulator 2686. Insulator 2686 may be, for example, Kapton tape having a thickness of 50 µm and a dielectric strength of 12kV. In addition to covering the cut end 2587 with the insulator 2686, the entire length of the macro-fiber composite actuator except for the pair of soldering pads 115A, 115B may further be covered with an insulator 2688. Insulator 2688 may also be, for example, Kapton tape having a thickness of 50 µm and a dielectric strength of 12kV.

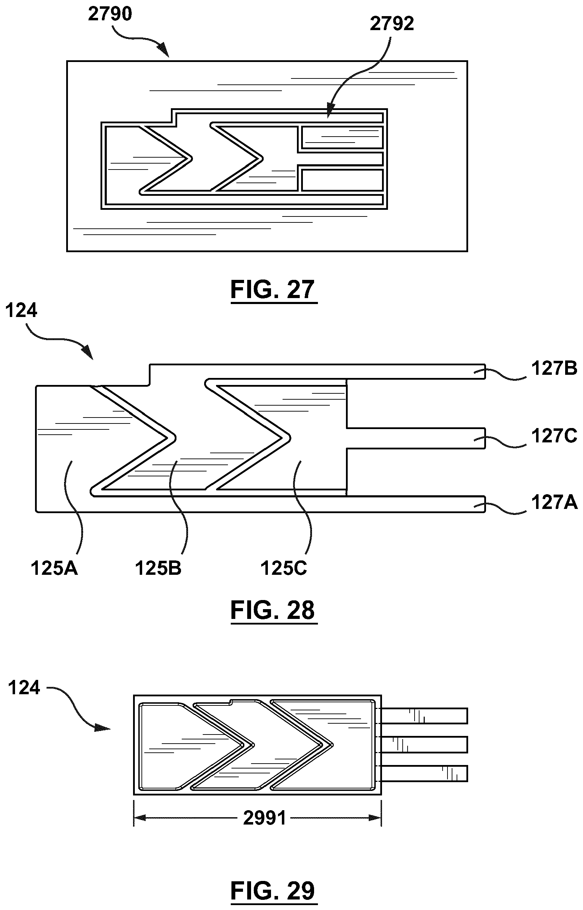

If a sensor such as the sensor 124 is to be incorporated into the open ring component, the sensor is formed and disposed or applied onto the macro-fiber composite actuator. In an embodiment, the sensor is provided in a preform suitable for assembly into the open ring component. In another embodiment, a template or mold 2790 as shown in FIG. 27 is utilized to form or make the sensor. The mold 2790 includes a guide or cutting pattern 2792 formed thereon, and the mold may be formed from Teflon. When copper tape is pressed onto the mold 2790, the copper tape molds or conforms to the mold 2790 and the copper tape may be cut with a cutting blade along the cutting pattern 2792 of the mold 2790. After cutting, the sensor 124 has a size and shape as shown in FIG. 28 with a plurality of buttons or user input elements 125A, 125B, 125C having corresponding pins 127A, 127B, 127C, respectively. Pins 127A, 127B are bent upwards to extend at approximately a 90-degree angle from the remaining planar sensor as shown in FIG. 29 such that the sensor 124 has the size and shape suitable for assembly into the open ring component. Lastly, the entire length of the sensor except for the pins 127A, 127B, 127C are covered with an insulator 2991. Insulator 2991 may also be, for example, Kapton tape having a thickness of 50 µm and a dielectric strength of 12kV. Although described herein as being formed from the mold 2790, other manufacturing techniques may be utilized for forming the sensor 124 including but not limited to stamping and/or die cutting manufacturing methods.

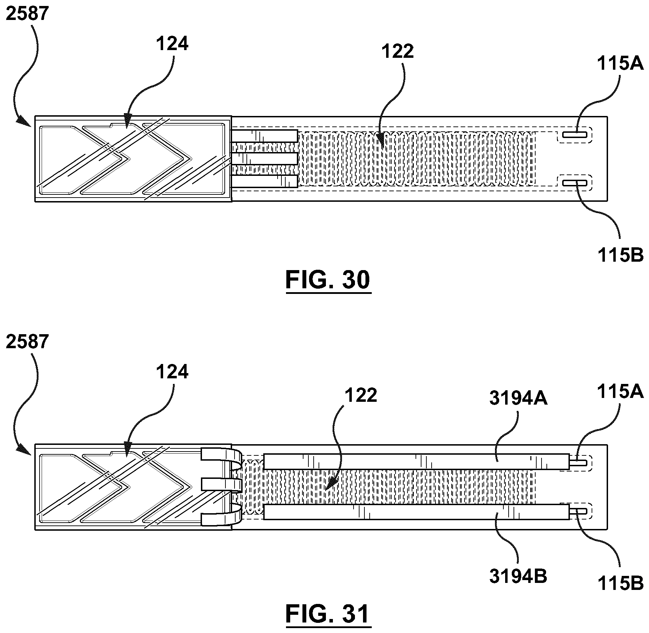

In an embodiment, after the sensor is formed, the sensor is assembled onto the macro-fiber composite actuator prior to step 1666 of FIG. 16. More particularly, with reference to FIG. 30, the sensor 124 is disposed onto the macro-fiber composite actuator 122 such that the blunt end of the sensor (i.e., the end not including the pins 127A, 127B, 127C) is aligned with the uncut end 2587 of the macro-fiber composite actuator. The sensor may be secured to the macro-fiber composite actuator with Kapton tape. In an embodiment, for additional protection, band extensions 3194A, 3194B may be added to the sensor and macro-fiber composite actuator assembly. Band extensions 3194A, 3194B are formed from copper tape and extend from soldering pads 115A, 115B, respectively, to adjacent to the sensor 124. Band extensions 3194A, 3194B ensure connection between the soldering pads 115A, 115B and the power leads 128A, 128B (see FIGS. 1-2), regardless of the position of the power leads 128A, 128B.

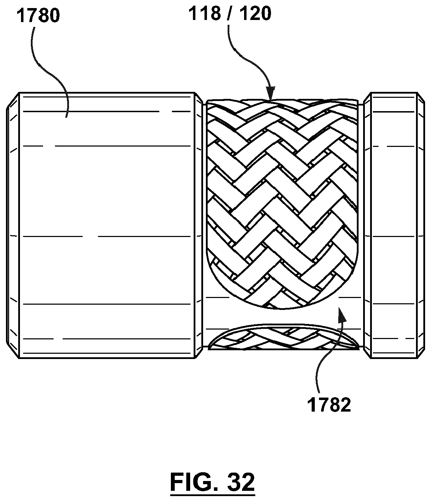

In an embodiment, the first and second laminate layers may be bonded together prior to step 1666 of FIG. 16. More particularly, in an embodiment, the first and second laminate layers are disposed directly on top of each other in an overlapping or overlaying fashion and bonded together. The overlapping first and second laminate layers are then disposed on the mold 1780 as shown in FIG. 32. The overlapping first and second laminate layers are rolled or disposed within the circumferential groove 1782 of the mold 1780 such that the first laminate layer 118 (having parallel fibers) abuts against the mold while the second laminate layer 120 (having woven fibers) is on top thereof. A layer of fluorocarbon ribbon is then positioned or wrapped around the second laminate layer 120 and secured to the mold 1780. The layer of fluorocarbon ribbon shrinks during heating hereof and applies a strong and uniform compression or pressure force onto the first and second laminate layers to ensure that the epoxy of the first and second laminate layers migrates in a uniform manner. The assembly is then cured by heating it within an oven a temperature of approximately 275 degrees F for a time period between 3 and 4 hours. After curing and cool down, the layer of fluorocarbon ribbon may be removed and the subassembly of the first and second laminate layers bonded together may remain positioned on the mold 1780. The macro-fiber composite actuator 122 (and sensor 124 disposed thereon if present) are then assembled onto the mold 1780 in an overlapping fashion as shown in FIG. 33.

In another embodiment, the first and second laminate layers may stay separate or independent from each other and may bond together simultaneously with the macro-fiber composite (MFC) actuator. More particularly, to assemble all the components onto the mold 1780, the first laminate layer, the second laminate layer, and the macro-fiber composite actuator (and sensor 124 disposed thereon if present) are disposed onto the mold 1780 in an overlapping fashion such that the first laminate layer 118 (having parallel fibers) abuts against the mold while the second laminate layer 120 (having woven fibers) is on top thereof, and the macro-fiber composite actuator 122 (and sensor 124 disposed thereon if present) is on top of the second laminate layer 120. Adhesive such as epoxy is used to attach the bottom surface (opposite the sensor 124) of the macro-fiber composite actuator 122 onto the second laminate layer 120. In an embodiment, the epoxy has a dielectric strength of 25 kV/mm. A Teflon tape, which is later removed, may be utilized on the top surface of the macro-fiber composite actuator when applying the epoxy to protect the electrodes and the sensor from the epoxy.

In an embodiment hereof, prior to disposition of the macro-fiber composite actuator 122 and sensor 124 onto the mold 1780, one layer or two layers of fiberglass are applied to the bottom surface (opposite the sensor 124) of the macro-fiber composite actuator 122. In an embodiment, each layer of the fiberglass has a weight of 0.3 oz and a thickness of 60 *µ*m. Adhesive such as epoxy is used to attach the layer(s) of fiberglass to the bottom surface (opposite the sensor 124) of the macro-fiber composite actuator 122.

Referring now to step 1668 of FIG. 16, the assembly (*i*.*e*., the first laminate layer, the second laminate layer, the macro-fiber composite actuator and sensor disposed thereon) are heated on the mold 1780 to integrally form an open ring component 102. A layer of fluorocarbon ribbon is then positioned or wrapped around the macro-fiber composite actuator and secured to the mold 1780. The layer of fluorocarbon ribbon shrinks during heating hereof and applies a strong and uniform compression or pressure force onto the assembly to ensure bonding in a uniform manner. The assembly is then heated within an oven at a temperature of approximately 200 degrees F for a time period between 10 and 15 minutes. Alternatively, a heat gun may be used for curing the assembly. The assembly is then permitted to cure for between 12-24 hours. After curing, the layer of fluorocarbon ribbon may be removed and the open ring component 102 is removed from the mold as shown in FIG. 34 as well as in step 1670 of FIG. 16. The final step of the manufacturing process is to apply the outer protective coating 126 on all surfaces of the open ring component 102 as shown in FIG. 35 as well as in step 1671 of FIG. 16. The outer protective coating 126 may be epoxy.

Although the open ring component 102 is described herein with a single macro-fiber composite actuator 122, in another embodiment hereof the open ring component may include multiple macro-fiber composite actuators 122 integrally formed therein. For example, the open ring component 102 may include a first macro-fiber composite actuator adjacent to an outer surface of the open ring component as well as a second macro-fiber composite actuator adjacent to an inner surface of the open ring component. The first and second macro-fiber composite actuators may be driven concurrently to increase force and displacement of the open ring component or may be driven independently to vary haptic effects. In another example, the open ring component 102 may include a single layer with multiple macro-fiber composite actuators formed thereon that can be driven independently to provide spatial effects.

In addition, as previously described although the open ring component 102 is primarily described herein with a macro-fiber composite (MFC) actuator, other types of smart material actuators may be alternatively utilized. In an embodiment hereof, the actuator utilized in the open ring component 102 is formed from a piezoelectric material, an electroactive polymer (EAP), or a similar material to those previously listed.

In addition, although the open ring component 102 is described herein with a C-shaped body having a first end spaced from and opposed to a second end, in another embodiment hereof the ring may be an annular component (i.e., a closed ring with no circumferential gap or opening). One or more macro-fiber composite actuators may be bonded to the closed ring in such a way to create low-frequency haptic feedback. For instance, one or more macro-fiber composite actuators may be secured to a closed ring structure as a patch in one or more spaced apart sections of the ring. As another example, a combination of different types of smart material actuators (i.e., expansion or contraction based actuators) may be secured to a closed ring structure as a patch in one or more spaced apart sections of the ring.

In addition, the open ring component 102 may further include a ground plane applied or disposed over the sensor 124. The pins 127A, 127B, 127C of the sensor 124 are sensitive to capacitive changes. To protect them from external disturbances, a grounding plane is applied to block such external disturbances and ensure that only the buttons or user input elements 125A, 125B, 125C are sensitive to capacitive changes.

Further, the open ring component 102 may be utilized for additional applications beyond providing haptic effects as described herein. For example, in an embodiment, the open ring component 102 may be utilized to emit a wireless signal to enable tracking thereof within a simulated or virtual environment. As another example, the open ring component 102 may be utilized to emit heat to enable infrared detection thereof within a simulated or virtual environment.

The breadth and scope of the present invention should not be limited by any of the above-described exemplary embodiments but should be defined only in accordance with the appended claims and their equivalents. It will also be understood that each feature of each embodiment discussed herein, and of each reference cited herein, can be used in combination with the features of any other embodiment. All patents and publications discussed herein are incorporated by reference herein in their entirety.

## Claims

1. A wearable device for providing haptic effects, comprising:
an open ring component configured to abut against to a first portion of a wearer, the open ring component with a first end, a second end spaced from and opposed to the first end, and a circumferential opening defined between the first end and the second end, the circumferential opening having a first width when the open ring component is in a non-actuated state, wherein the open ring component includes
a first laminate layer,
a second laminate layer, and
an actuator integrally coupled to the first laminate layer and the second laminate layer, the actuator being configured to receive a command signal from a processor and to deform the open ring component to an actuated state in which the circumferential opening has a second width in response to the command signal to provide a force onto a second portion of the wearer that is disposed between the first end and the second end of the open ring component, the second width being different than the first width of the circumferential opening.

2. The wearable device of clam 1, wherein the actuator is a macro-fiber composite (MFC) actuator.

3. The wearable device of clam 1, wherein the first laminate layer is formed from a unidirectional carbon fiber composite;
or
wherein the first laminate layer is formed from a unidirectional carbon fiber composite and
wherein fibers of the unidirectional carbon fiber composite are oriented parallel to a longitudinal axis of the first laminate layer.

4. The wearable device of clam 1, wherein the second laminate layer is formed from a woven carbon fiber composite;
or
wherein the second laminate layer is formed from a woven carbon fiber composite and wherein fibers of the woven carbon fiber composite are oriented at an angle of 45 degrees relative to a longitudinal axis of the second laminate layer.

5. The wearable device of claim 1, wherein the open ring component further comprises a sensor disposed on the actuator;
or
wherein the open ring component further comprises a sensor disposed on the actuator and
wherein the sensor includes a plurality of buttons configured to sense user interaction.

6. The wearable device of claim 1, wherein the first portion of a wearer is a circumferential portion of a digit of a hand of a wearer.

7. A wearable device for providing haptic effects, comprising:
an open ring component configured to abut against a digit of a hand of a wearer, the open ring component having a first end and a second end spaced from and opposed to the first end, wherein the open ring component includes
a first laminate layer, the first laminate layer being formed from a unidirectional carbon fiber composite,
a second laminate layer, the second laminate layer being formed from a woven carbon fiber composite, and
a macro-fiber composite (MFC) actuator integrally formed with the first laminate layer and the second laminate layer, the macro-fiber composite actuator being configured to receive a command signal from a processor and to deform the open ring component in response to the command signal to provide a force onto a portion of the wearer that is disposed between the first end and the second end of the open ring component.

8. The wearable device of claim 7, wherein the open ring component further comprises a sensor disposed on the macro-fiber composite actuator;
or
wherein the open ring component further comprises a sensor disposed on the macro-fiber composite actuator and wherein the sensor includes a plurality of buttons configured to sense user contact.

9. The wearable device of claim 7, wherein a thickness of the ring is uniform.

10. The wearable device of claim 7, wherein the second laminate layer is disposed on an outer surface of the first laminate layer and the macro-fiber composite actuator is disposed on an outer surface of the second laminate layer.

11. The wearable device of claim 7, wherein fibers of the woven carbon fiber composite are oriented at an angle of 45 degrees relative to a longitudinal axis of the second laminate layer.

12. The wearable device of claim 7, wherein fibers of the unidirectional carbon fiber composite are oriented parallel to a longitudinal axis of the first laminate layer.

13. The wearable device of claim 7, wherein the macro-fiber composite actuator includes a coating of insulation disposed thereon;
or
wherein the macro-fiber composite actuator includes a coating of insulation disposed thereon and wherein the macro-fiber composite actuator further includes at least one layer of fiberglass disposed on an inner surface thereof.

14. A method of manufacturing a wearable device for providing haptic effects, comprising:
assembling a first laminate layer, a second laminate layer, and a macro-fiber composite (MFC) actuator onto a mold in an overlapping manner, wherein
the first laminate layer is formed from a unidirectional carbon fiber composite, and
the second laminate layer is formed from a woven carbon fiber composite;
heating the first laminate layer, the second laminate layer, and the macro-fiber composite actuator on the mold to integrally form an open ring component including the first laminate layer, the second laminate layer, and the macro-fiber composite actuator; and
removing the open ring component from the mold, the open ring component having a first end and a second end spaced from and opposed to the first end.

15. The method of claim 14, further comprising:
assembling a sensor onto the macro-fiber composite actuator, wherein the step of assembling the sensor onto the macro-fiber composite actuator occurs prior to the step of assembling the first laminate layer, the second laminate layer, and the macro-fiber composite actuator onto the mold.
